# FASCICULE DE BREVET EUROPEEN

(11) **EP 0 789 365 B1**
(45) Date de publication et mention de la délivrance du brevet: **02.08.2000**
(21) Numéro de dépôt: 97400244.6
(22) Date de dépôt: 04.02.1997
(51) Int. Cl.: G21C 3/62, G21C 3/64, C04B 35/51

(54) **Matériau combustible nucléaire composite et procédé de fabrication du matériau**
Verbundkernbrennstoffmaterial und sein Herstellungsverfahren
Composite nuclear fuel material and process for its fabrication

(30) Priorité: 07.02.1996 FR 9601500
(43) Date de publication de la demande: 13.08.1997
(73) Titulaire: COMMISSARIAT A L'ENERGIE ATOMIQUE, 75015 Paris (FR)
(72) Inventeur: Viallard, Isabelle, 04700 Manosque (FR); Bonnerot, Jean-Marc, 13540 Puyricard (FR); Fleury, Jean-Pierre, 04700 Manosque (FR)
(74) Mandataire: Dubois-Chabert, Guy

(56) Documents cités:
- GB-A- 1 116 663
- GB-A- 1 285 190
- GB-A- 2 107 691
- US-A- 3 657 137

## Description

La présente invention a pour objet un matériau combustible nucléaire ayant notamment une bonne résistance à la propagation des fissures sous irradiation et une rétention élevée des produits de fission volatils, ainsi qu'un procédé de fabrication dudit matériau combustible nucléaire composite.

Lors de l'exploitation des combustibles nucléaires, de nombreux problèmes se posent concernant notamment la résistance mécanique des combustibles sous irradiation. En effet, le gonflement des combustibles sous irradiation et le relâchement des produits de fission volatils entraînent l'apparition de contraintes locales et peuvent provoquer une fissuration du combustible et entraîner la rupture de la gaine du combustible. Il faut donc limiter la pression interne des gaines et l'interaction des produits de fission avec ces gaines. C'est pourquoi la qualité du combustible utilisé est très importante, et toute modification visant à améliorer les performances du combustible actuel doit tendre à limiter les interactions gaine-combustible.

Dans le document "Les techniques de l'ingénieur" (Génie Energétique B8II 3620-11/5.12), les pastilles de combustible sont réalisées à partir d'une poudre de UO₂ à laquelle on ajoute U₃O₈ pour améliorer la solidité des pastilles crues de combustible. Les pastilles crues de combustible sont fabriquées à pression élevée, et le collage des grains de UO₂/U₃O₈ est facilité par l'addition de stéarate de zinc. Ce document décrit également la possibilité de rajouter des produits porogènes dans le combustible. Les pastilles crues obtenues sont ensuite frittées à haute température.

La demande FR-A-2 706 066 décrit un combustible nucléaire à base de UO₂ ayant des propriétés améliorées de rétention des produits de fission. Selon ce document, le combustible comprend un métal tel que Cr ou Mo, capable de piéger l'oxygène, issu de la fission nucléaire, pour former un oxyde.

Mais aucun des documents cités ne résout simultanément les problèmes posés par le gonflement du combustible nucléaire sous irradiation, et par la libération des produits de fission volatils qui entraînent des contraintes locales au sein du matériau.

La présente invention a précisément pour but de fournir un nouveau matériau combustible qui permet de résoudre les problèmes évoqués ci-dessus, ainsi qu'un procédé de fabrication dudit matériau combustible.

Ce nouveau type de matériau combustible nucléaire composite comprend une matrice céramique, inerte sous irradiation, dans laquelle sont dispersées des particules de combustible nucléaire avec un jeu de 1 à 10 µm entre la matrice et les particules, la matrice ayant un coefficient de dilatation thermique inférieur à celui desdites particules de combustible.

Cette matrice est inerte sous irradiation, et présente une faible section efficace d'absorption neutronique et un faible gonflement sous irradiation.

Des matrices ayant de telles propriétés sont par exemple les céramiques telles que les spinelles, comme le spinelle MgAl₂O₄, des oxydes tels que la magnésie MgO ou l'oxyde d'yttrium Y₂O₃. De préférence, la matrice utilisée est le spinelle MgAl₂O₄.

L'art antérieur cite des matrices telles que l'oxyde de béryllium, l'oxyde d'aluminium et l'oxyde de zirconium, mais ces matrices présentent de nombreux inconvénients. En effet, l'oxyde de béryllium est un modérateur de neutron, et l'oxyde d'aluminium et l'oxyde de zirconium présentent un effet de gonflement sous irradiation. De plus, l'oxyde de zirconium se solubilise dans UO₂ à partir de 1200°C (changement de phase). Tous ces inconvénients ne permettent pas d'obtenir un matériau combustible ayant les propriétés requises.

Les particules de combustible nucléaire peuvent être de divers types, généralement, on utilise des particules d'oxydes comme UO₂ ou d'oxydes mixtes à base de UO₂ tels que UO₂-PuO₂, UO₂-ThO₂. On peut par ailleurs ajouter divers additifs tels que les additifs connus pour régler la taille des grains et/ou pour améliorer la rétention des produits de fission.

De préférence, les particules de combustible nucléaire utilisées dans la présente invention sont des particules de UO₂.

La taille des particules est choisie de façon à obtenir, après frittage, un jeu de quelques µm entre les particules et la matrice. Généralement, on utilise des particules de 70 à 230 µm, de préférence de 90 à 120 µm. La proportion de UO₂ dans le matériau combustible nucléaire est généralement de 20 à 40% en volume de matériau combustible nucléaire afin d'obtenir un matériau selon l'invention présentant les propriétés recherchées.

Le jeu entre la matrice et les particules permet de créer un volume d'expansion pour les produits de fission volatils et permet l'accommodation partielle d'une partie du gonflement du combustible UO₂ sous irradiation limitant ainsi les contraintes locales engendrées lors de l'exploitation du combustible nucléaire et retarde donc l'endommagement des particules de UO₂ et de la matrice.

D'autre part, le matériau combustible nucléaire selon la présente invention, présente une meilleure conductivité thermique que celle de UO₂ seul. En effet, la température du combustible atteinte en cours d'irradiation en réacteur conduit à une diminution du gradient thermique obtenu entre le centre et la périphérie de la pastille, favorable vis-à-vis de la rétention des produits de fission, le phénomène de diffusion des produits de fission pour l'UO₂ étant activé thermiquement.

Par ailleurs, le matériau combustible nucléaire selon l'invention présente une meilleure résistance à la propagation des fissures dans la pastille. En effet, le jeu existant entre les particules de combustible et la matrice entraîne une déflexion des fissures créées en cours d'irradiation.

La présente invention fournit également un procédé d'obtention du matériau combustible nucléaire comprenant les étapes suivantes :
a) mélange de particules d'un précurseur d'un combustible nucléaire ayant des diamètres situés dans une plage granulométrique donnée, et d'une poudre d'un matériau destiné à former la matrice céramique, inerte sous irradiation,
b) mise en forme du mélange par compression, et
c) frittage, du mélange mis en forme, sous atmosphère réductrice comprenant H₂O, par exemple par traitement thermique, et dans des conditions telles que le précurseur du combustible nucléaire ait son volume de maille cristalline réduit lors du traitement thermique.

Lorsque le combustible doit être UO₂, on peut utiliser comme précurseur, présentant cette caractéristique de diminution de volume, de maille cristalline U₃O₈ ou un mélange U₃O₈-UO₂. En effet, lors de la transformation de l'oxyde U₃O₈ de structure orthorhombique en dioxyde d'uranium UO₂, de structrure cubique, un jeu de quelques microns est créé entre la matrice et les particules par diminution du volume de maille cristalline du combustible.

Lors du mélange des particules du précurseur et de la poudre de matrice, il est essentiel d'éliminer les gros agglomérats de poudre de matrice, éventuellement formés au cours du mélange, de manière à optimiser le comportement au pressage, et à la densification ultérieure.

L'étape de mélange est très importante puisqu'elle conditionne l'homogénéité finale du combustible composite. Elle doit être effectuée délicatement pour ne pas créer de fines supplémentaires.

Le mélange peut être effectué par brassage mécanique pendant 30 min. au moins au moyen par exemple d'un mélangeur à socs ou d'un mélangeur TURBULA, réglé à faible vitesse par exemple de 20 t/min.

La mise en forme du mélange par compression à froid, en particulier sous la forme de pastilles, peut être réalisée par des méthodes classiques. On peut par exemple l'effectuer au moyen d'une presse hydraulique, de préférence à double effet.

Par ailleurs, un double cycle de pressage avec palier intermédiaire permet de limiter les défauts inhérents à une mauvaise répartition du mélange dans la matrice de la presse. On peut effectuer avec cette presse une première étape de compression à une pression de 30 à 50 MPa, suivi d'une seconde étape à une pression de 300 à 350 MPa. Chaque étape comprend un temps de montée, un temps de maintien et un temps de descente de pression.

Il est vivement recommandé de lubrifier la matrice de presse au moyen d'un lubrifiant, par exemple de stéarate de zinc, sous forme d'aérosol, avant mise en forme de la poudre.

Le transfert du mélange de poudre, constitué de la matrice et des particules de combustible, du poste de préparation à la presse doit de plus être suffisamment rapide afin de limiter la ségrégation des particules dans la poudre de la matrice qui altérerait l'homogénéité des pastilles de combustible. Tout défaut de répartition à ce niveau de la fabrication se traduira par des défauts irrésorbables lors du frittage.

Le frittage est réalisé dans des conditions (température, durée et atmosphère) qui permettent d'effectuer la transformation du précurseur en combustible, de densifier correctement les deux matériaux (combustible et matrice).

Pour obtenir la transformation du précurseur en combustible, dans le cas de particules d'U₃O₈, il convient d'utiliser une atmosphère réductrice humide. Celle-ci est de préférence constituée d'hydrogène humidifié par exemple à 2% volumique d'eau, ce qui permet d'obtenir la réduction totale de U₃O₈ en UO₂ à une température inférieure à 600°C. L'humidification permet d'activer la diffusion cationique lors du frittage et de favoriser la densification des deux matériaux. L'atmosphère réductrice peut aussi être constituée d'un mélange humidifié d'hydrogène et de gaz inerte tel que l'argon.

Lorsqu'on utilise l'hydrogène pur humidifié, ou le mélange hydrogène argon humidifié, le rapport des pressions partielles pH₂/pH₂O est de 40 à 60, de préférence voisin de 50.

La température et la durée du frittage sont choisies en fonction des matériaux utilisés comme combustible et comme matrice. On peut utiliser par exemple des températures de 1640 à 1700°C. Pour le spinelle MgAl₂O₄, par exemple, la température de frittage est de 1650°C.

Pour le frittage, le cycle de traitement peut comporter successivement une montée en température à une vitesse d'environ 100 à 300°C/h jusqu'à la température de frittage, un maintien à la température de frittage pendant environ 1 heure et une descente jusqu'à la température ambiante à la vitesse de 150 à 350°C/h.

Selon l'invention, ce procédé permet d'obtenir un matériau combustible nucléaire à partir d'une matrice céramique inerte sous irradiation et d'un précurseur d'un combustible nucléaire, qui se caractérise par l'obtention d'un jeu entre les particules de combustible et la matrice, créé grâce à la transformation du précurseur en combustible entraînant la diminution de la taille des particules.

Par exemple, le précurseur des particules étant U₃O₈ de structure orthorhombique, on obtient des particules de UO₂ ayant un volume de maille cristalline, de structure cubique, plus petit que celui de U₃O₈. La transformation de U₃O₈ en UO₂ s'effectue à basse température, inférieure à 600°C.

La réduction de la taille de la maille cristalline élémentaire, de l'ordre de 21% en volume, procure un jeu à l'interface entre la matrice et les particules de UO₂ avant le début du processus de densification du mélange de particules de UO₂ et de la matrice spinelle.

Le jeu n'est rattrapé que partiellement lors du frittage, les deux composants présentant des cinétiques de densification au frittage comparables et les débuts de densification des deux composants étant simultanés.

Le procédé de fabrication des particules de précurseur peut être effectuée par mise en oeuvre des étapes suivantes :
1) pressage de la poudre de précurseur pour obtenir des comprimés crus,
2) concassage des comprimés crus pour obtenir des granulés,
3) tamisage des granulés,
4) sphéroïdisation des granulés tamisés en particules de précurseur, et
5) élimination par tamisage des particules de précurseur dont le diamètre se situe en dehors de la plage granulométrique donnée.

Lorsque le précurseur du combustible est U₃O₈, il peut être obtenu par calcination de poudre de UO₂ à une température de 450 à 500°C. Cette calcination est faite par exemple dans des nacelles en alumine ou en Inconel.

Lorsque le précurseur est un mélange de poudres de UO₂ et U₃O₈, on peut préparer la poudre de U₃O₈ comme précédemment, puis lui ajouter la quantité voulue de poudre de UO₂.

Les étapes suivantes de préparation des particules de précurseur de combustible de U₃O₈ consistent à presser par exemple à 100 MPa la poudre de U₃O₈ ou un mélange UO₂-U₃O₈ pour obtenir des comprimés crus, concasser lesdits comprimés crus par exemple au moyen d'un granulateur oscillant pour obtenir des granulés, tamiser lesdits granulés, les sphéroïdiser en particules, et éliminer, par tamisage les particules situées en dehors de la plage granulométrique donnée.

Les granulés obtenus par concassage des comprimés crus de U₃O₈ doivent être de forme arrondie et exempts d'angles vifs.

Les granulés concassés sont ensuite tamisés. Le tamisage des granulés est réalisé à l'aide de tamis de préférence en acier inoxydable. La maille des tamis utilisés doit être adaptée à une granulométrie ou dimension des particules désirées, en prévoyant la réduction volumique due au changement de structure cristalline lors du traitement thermique.

En effet, l'importance du jeu obtenu après frittage dépend notamment de la dimension des particules de précurseur combustible.

Le tamisage est par exemple opéré pour recueillir des particules de 100 à 300 µm et de préférence de 120 à 160 µm. Dans le cas d'un tamisage de 120 à 160 µm, on obtient après frittage des particules de diamètre de 90 à 120 µm.

La sphéroïdisation est effectuée dans un mélangeur, par exemple un mélangeur TURBULA, dans un récipient sphérique positionné au centre de gravité de l'enceinte du mélangeur et pendant au moins 20 h.

D'autres caractéristiques et avantages de l'invention apparaîtront mieux à la lecture de l'exemple suivant, donné bien entendu à titre illustratif et non limitatif en référence aux dessins annexés, sur lesquelles :
- la figure 1 représente une coupe métallographique (agrandissement 500) de particules de UO₂ ayant un diamètre de 90 à 120 µm, dispersées dans une matrice spinelle MgAl₂O₄, et montre le jeu de 1 à 2 µm entre la matrice et les particules de UO₂ ;
- la figure 2 représente une coupe métallographique (agrandissement 50) de particules de UO₂ d'un diamètre de 90 à 120 µm dispersées dans une matrice spinelle MgAl₂O₄, et montre la déflexion des fissures par le jeu compris entre la matrice et les particules.

Dans cet exemple, on prépare un matériau combustible nucléaire composite comprenant une matrice spinelle MgAl₂O₄ dans laquelle sont dispersées des particules de combustible nucléaire de UO₂.

La première phase de fabrication du matériau combustible nucléaire composite consiste en la préparation des particules de précurseur du combustible UO₂, qui sont des particules de U₃O₈.

La poudre de UO₂ est calcinée sous air, à la température de 500°C, pendant 2 heures, pour obtenir une poudre d'oxyde supérieur U₃O₈.

Pour cette opération, la poudre de UO₂ est versée dans des nacelles en alumine. La hauteur du lit de poudre est inférieure à 3 cm afin que l'oxydation s'opère de manière complète dans tout le volume de poudre. On obtient une poudre brute de U₃O₈,

La poudre brute de U₃O₈ est ensuite pressée sous forme de comprimés à une pression de 100 MPa au moyen d'une presse hydraulique à double effet. Les comprimés crus obtenus subissent alors un concassage doux de manière à obtenir des granulés de forme arrondie exempts d'angles vifs au moyen d'un granulateur oscillant.

Les granulés obtenus sont tamisés à l'aide de tamis en acier inoxydable ayant des ouvertures de maille de 125 et 160 µm. Les granulés de U₃O₈ obtenus après tamisage sont ensuite sphéroïdisés. La sphéroïdisation est mise en oeuvre dans un mélangeur TURBULA, pendant 20 heures dans un récipient sphérique positionné au centre de gravité de l'enceinte du mélangeur. Après sphéroïdisation, on élimine par tamisage les fines particules situées en dehors de la plage granulométrique donnée (125 à 160 µm).

La deuxième phase de fabrication du matériau combustible nucléaire composite consiste en l'élaboration du matériau composite.

Les particules de U₃O₈ obtenues lors de la première phase de fabrication du matériau composite sont incorporées dans une poudre de matrice, la poudre de matrice est le spinelle MgAl₂O₄. Lors de l'incorporation, les gros agglomérats de poudre spinelle formés sont éliminés pour optimiser le comportement au pressage et la densification ultérieure.

Le mélange des particules de U₃O₈ et de la matrice spinelle MgAl₂O₄ est ensuite effectué par brassage mécanique pendant 30 min. au moins, au moyen d'un mélangeur à socs réglé à faible vitesse de 20 t/min.

Le mélange obtenu est ensuite comprimé au moyen d'une presse hydraulique à double effet, avec un premier palier à 50 MPa comprenant un temps de montée en pression de 3 secondes, un temps de maintien en pression de 4 secondes et un temps de descente en pression de 3 secondes, suivi d'un second palier à 300 MPa comprenant un temps de montée en pression de 2 secondes, un temps de maintien en pression de 4 secondes et un temps de descente en pression de 3 secondes. La matrice de la presse a été lubrifiée à l'aide d'un aérosol de stéarate de zinc.

Le mélange, matrice spinelle/précurseur U₃O₈, comprimé est ensuite soumis à un traitement thermique dans un four de frittage.

Ce traitement thermique est effectué sous atmosphère réductrice H₂+2%H₂O pendant 1 heure à 1650°C et comporte successivement une montée en température à une vitesse de 150°C/h jusqu'à la température de frittage de 1650°C, un maintien à cette température pendant 1 heure et une descente jusqu'à la température ambiante à la vitesse de 300°C/h.

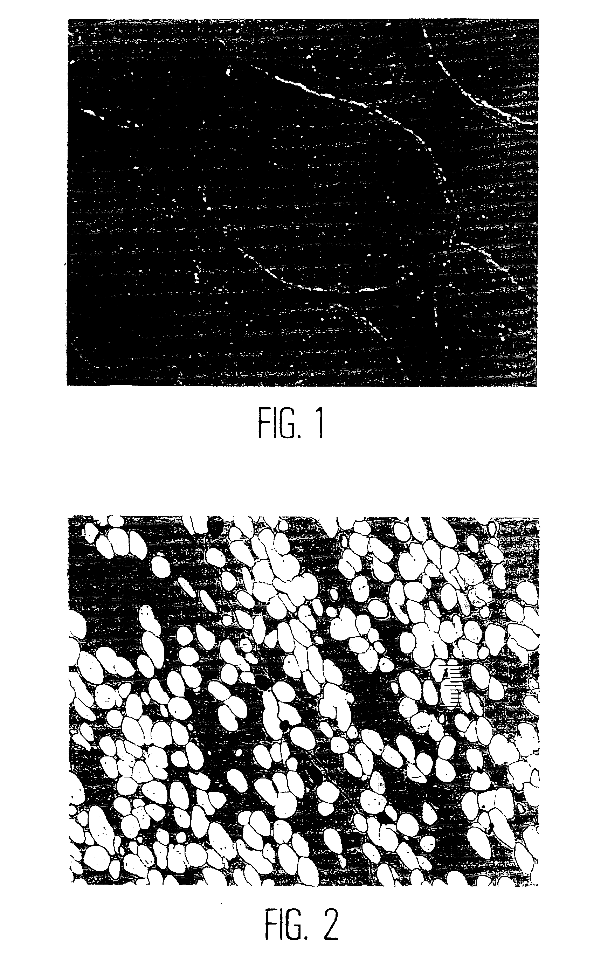

Les pastilles obtenues dans cet exemple ont une densité finale supérieure à 94% de la densité théorique. La matrice spinelle et les particules de UO₂ apparaissent très denses comme le montre la coupe métallographique de la figure 1. Le retrait final des pastilles est de l'ordre de 21%, il est supérieur au retrait d'un composite spinelle UO₂ avec un contact parfait entre matrice et particules. Une partie du jeu initial créé entre matrice et particules est donc rattrapée. La cinétique de densification du matériau composite au cours du frittage suit celle de la matrice spinelle.

La présence des particules ne perturbe donc pas la cinétique de densification du matériau. En effet, les débuts de densification des deux phases prises séparément sont simultanés mais les particules de UO₂ ont une vitesse de densification plus rapide que celle du spinelle MgAl₂O₄ en début de frittage. Le rattrapage partiel du jeu entre la matrice et les particules s'explique par une vitesse de densification plus importante pour le spinelle à partir de 1300°C. A cette température, la cinétique de frittage du dioxyde d'uranium présente une décélération alors que celle du spinelle n'a pas encore atteint son maximum.

L'absence de contact entre les particules et la matrice est mise en évidence, lors du polissage des échantillons du matériau de combustible nucléaire selon la présente invention, où l'on peut observer l'arrachement des particules dont le diamètre résiduel après tronçonnage est inférieur au diamètre réel de la particule de U₃O₈. Les arrachements sont d'autant plus nombreux que la taille des particules initiales de U₃O₈ est élevée, le jeu créé étant d'épaisseur plus grande.

Le phénomène de déflexion des fissures est illustré sur la figure 2. La fissure contourne la particule au niveau de l'interface où la résistance est moindre. Des branchements et arrêts de fissure sont visibles et témoignent du renforcement du matériau.

La relaxation des contraintes au niveau de l'interface se manifeste par une diminution du taux de particules UO₂ fissurées au sein du matériau composite.

## Revendications

1. Matériau combustible nucléaire composite caractérisé en ce qu'il comprend une matrice céramique inerte sous irradiation dans laquelle sont dispersées des particules de combustible nucléaire, avec un jeu de 1 à 10 µm entre la matrice et les particules, la matrice ayant un coefficient de dilatation thermique inférieur à celui desdites particules de combustible.

2. Matériau combustible nucléaire selon la revendication 1, caractérisé en ce que la matrice est un matériau choisi parmi un spinelle, la magnésie et l'oxyde d'yttrium.

3. Matériau combustible nucléaire selon la revendication 2, caractérisé en ce que le spinelle est MgAl₂O₄.

4. Matériau combustible nucléaire selon l'une quelconque des revendications 1 à 3, caractérisé en ce que les particules de combustible dispersées sont des particules de UO₂ ou d'oxyde mixte à base de UO₂.

5. Matériau combustible nucléaire selon les revendications 1 à 3, caractérisé en ce que les particules dispersées dans la matrice ont un diamètre de 70 µm à 230 µm.

6. Matériau combustible nucléaire selon la revendication 4, caractérisé en ce que les particules dispersées dans la matrice ont un diamètre de 70 µm à 230 µm.

7. Matériau combustible nucléaire selon la revendication 5 ou 6, caractérisé en ce que les particules dispersées dans la matrice ont un diamètre de 90 µm à 120 µm.

8. Matériau combustible nucléaire selon la revendication 4, caractérisé en ce que UO₂ représente de 20 à 40% en volume du matériau combustible nucléaire.

9. Procédé de fabrication d'un matériau combustible nucléaire selon l'une quelconque des revendications 1 à 8, caractérisé en ce qu'il comprend les étapes suivantes ;
a) mélange de particules d'un précurseur d'un combustible nucléaire ayant des diamètres situés dans une plage granulométrique donnée, et d'une poudre d'un matériau destiné à former une matrice céramique, inerte sous irradiation,
b) mise en forme du mélange par compression, et
c) frittage, du mélange mis en forme, sous atmosphère réductrice comprenant H₂O et dans des conditions telles que le précurseur du combustible nucléaire ait son volume de maille cristalline réduit lors du traitement thermique.

10. Procédé de fabrication d'un matériau combustible nucléaire selon la revendication 9, caractérisé en ce que l'atmosphère réductrice comprend H₂ et H₂O.

11. Procédé de fabrication d'un matériau combustible nucléaire selon la revendication 9, caractérisé en ce que l'atmosphère réductrice est un mélange d'argon, d'H₂ et d'H₂O.

12. Procédé de fabrication d'un matériau combustible nucléaire selon la revendication 10 ou 11, caractérisé en ce que le rapport des pressions partielles pH₂/pH₂O est de 40 à 60.

13. Procédé de fabrication d'un matériau combustible nucléaire selon la revendication 9, caractérisé en ce que les particules de précurseur de combustible ont un diamètre de 100 à 300 µm.

14. Procédé de fabrication d'un matériau combustible nucléaire selon la revendication 9, caractérisé en ce que les particules de précurseur de combustible ont un diamètre de 120 à 160 µm.

15. Procédé de fabrication d'un matériau combustible nucléaire selon la revendication 9, caractérisé en ce que le précurseur est U₃O₈ ou un mélange UO₂-U₃O₈.

16. Procédé de fabrication d'un matériau combustible nucléaire selon la revendication 9, caractérisé en ce que la mise en forme par compression est effectuée en deux étapes, la première étape de compression étant effectuée à une pression de 30 à 50 MPa, la deuxième étape de compression étant effectuée à une pression de 300 à 350 MPa.

17. Procédé de fabrication d'un matériau combustible nucléaire selon l'une quelconque des revendications 9 à 16, caractérisé en ce que le frittage est effectué à une température de 1640 à 1700°C.

18. Procédé de fabrication d'un matériau combustible nucléaire selon la revendication 9, caractérisé en ce que les particules de précurseur sont obtenues par mise en oeuvre des étapes suivantes :
1) pressage de la poudre de précurseur pour obtenir des comprimés crus,
2) concassage des comprimés crus pour obtenir des granulés,
3) tamisage des granulés,
4) sphéroïdisation des granulés tamisés en particules de précurseur, et
5) élimination par tamisage des particules de précurseur dont le diamètre se situe en dehors de la plage granulométrique donnée.

19. Procédé selon la revendication 18, caractérisé en ce que la poudre de précurseur étant U₃O₈, celle-ci est obtenue par calcination de poudre de UO₂ sous air, à une température de 450°C à 500°C.

## Patentansprüche

1. Verbundkernbrennstoffmaterial, dadurch gekennzeichnet, daß es eine unter Bestrahlung inerte keramische Matrix umfaßt, in welcher Kernbrennstoffpartikeln mit einem Spiel von 1 bis 10 µm zwischen der Matrix und den Partikeln dispergiert sind, wobei die Matrix einen thermischen Ausdehnungskoeffizienten hat, der kleiner ist als der der genannten Brennstoffpartikeln.

2. Kernbrennstoffmaterial nach Anspruch 1, dadurch gekennzeichnet, daß die Matrix ein unter einem Spinell, Magnesiumoxid und Yttriumoxid gewähltes Material ist.

3. Kernbrennstoffmaterial nach Anspruch 2, dadurch gekennzeichnet, daß der Spinell MgAl₂O₄ ist.

4. Kernbrennstoffmaterial nach einem der Ansprüche 1 bis 3, dadurch gekennzeichnet, daß die dispergierten Brennstoffpartikeln Partikeln von UO₂ oder von Mischoxid auf der Basis von UO₂ sind.

5. Kernbrennstoffmaterial nach den Ansprüchen 1 bis 3, dadurch gekennzeichnet, daß die in der Matrix dispergierten Partikeln einen Durchmesser von 70 µm bis 230 µm haben.

6. Kernbrennstoffmaterial nach Anspruch 4, dadurch gekennzeichnet, daß die in der Matrix dispergierten Partikeln einen Durchmesser von 70 µm bis 230 µm haben.

7. Kernbrennstoffmaterial nach Anspruch 5 oder 6, dadurch gekennzeichnet, daß die in der Matrix dispergierten Partikeln einen Durchmesser von 90 µm bis 120 µm haben.

8. Kernbrennstoffmaterial nach Anspruch 4, dadurch gekennzeichnet, daß UO₂ 20 bis 40 Vol.-% des Kernbrennstoffmaterials darstellt.

9. Verfahren zur Herstellung eines Kernbrennstoffmaterials nach einem der Ansprüche 1 bis 8, dadurch gekennzeichnet, daß es die folgenden Schritte umfaßt:
a) Mischen von Partikeln eines Vorläufers eines Kernbrennstoffs, die Durchmesser haben, die in einem gegebenen Körnungsbereich liegen, und von einem Pulver eines Materials, das dazu bestimmt ist, eine keramische Matrix zu bilden, die unter Bestrahlung inert ist,
b) Formgebung der Mischung durch Pressen und
c) Sintern der in Form gebrachten Mischung unter reduzierender, H₂O enthaltender Atmosphäre und unter solchen Bedingungen, daß während der Wärmebehandlung das Volumen der Kristall-Elementarzelle des Kernbrennstoffvorläufers vermindert wird.

10. Verfahren zur Herstellung eines Kernbrennstoffmaterials nach Anspruch 9, dadurch gekennzeichnet, daß die reduzierende Atmosphäre H₂ und H₂O enthält.

11. Verfahren zur Herstellung eines Kernbrennstoffmaterials nach Anspruch 9, dadurch gekennzeichnet, daß die reduzierende Atmosphäre eine Mischung von Argon, H₂ und H₂O ist.

12. Verfahren zur Herstellung eines Kernbrennstoffmaterials nach Anspruch 10 oder 11, dadurch gekennzeichnet, daß das Verhältnis der Partialdrücke pH₂/pH₂O 40 bis 60 beträgt.

13. Verfahren zur Herstellung eines Kernbrennstoffmaterials nach Anspruch 9, dadurch gekennzeichnet, daß die Partikeln des Brennstoffvorläufers einen Durchmesser von 100 bis 300 µm haben.

14. Verfahren zur Herstellung eines Kernbrennstoffmaterials nach Anspruch 9, dadurch gekennzeichnet, daß die Partikeln des Brennstoffvorläufers einen Durchmesser von 120 bis 160 µm haben.

15. Verfahren zur Herstellung eines Kernbrennstoffmaterials nach Anspruch 9, dadurch gekennzeichnet, daß der Vorläufer U₃O₈ oder eine Mischung UO₂-U₃O₈ ist.

16. Verfahren zur Herstellung eines Kernbrennstoffmaterials nach Anspruch 9, dadurch gekennzeichnet, daß die Formgebung durch Pressen in zwei Schritten ausgeführt wird, wobei der erste Schritt des Pressens bei einem Druck von 30 bis 50 MPa, der zweite Schritt des Pressens bei einem Druck von 300 bis 350 MPa ausgeführt wird.

17. Verfahren zur Herstellung eines Kernbrennstoffmaterials nach einem der Ansprüche 9 bis 16, dadurch gekennzeichnet, daß die Sinterung bei einer Temperatur von 1640 bis 1700°C ausgeführt wird.

18. Verfahren zur Herstellung eines Kernbrennstoffmaterials nach Anspruch 9, dadurch gekennzeichnet, daß die Vorläuferpartikeln durch Ausführung der folgenden Schritte erhalten werden:
1) Pressen des Vorläuferpulvers, um rohe Preßlinge zu erhalten,
2) Zerkleinern der rohen Preßlinge, um ein Granulat zu erhalten,
3) Sieben des Granulats,
4) Kugelförmigmachen des gesiebten Granulats aus Vorläuferpartikeln und
5) Entfernen der Vorläuferpartikeln, deren Durchmesser außerhalb des vorgegebenen Körnungsbereichs liegt, durch Sieben.

19. Verfahren nach Anspruch 18, dadurch gekennzeichnet, daß das Vorläuferpulver U₃O₈ ist, wobei dieses durch Calcination von UO₂-Pulver unter Luft bei einer Temperatur von 450°C bis 500°C erhalten wird.

## Claims

1. Composite nuclear fuel material characterized in that it comprises a ceramic matrix inert under irradiation in which particles of nuclear fuel are dispersed, with a clearance of 1 to 10 µm between the matrix and the particles, the matrix having a lower thermal expansion coefficient than said fuel particles.

2. Nuclear fuel material in accordance with claim 1, characterized in that the matrix is a material chosen from among a spinel, magnesia and yttrium oxide .

3. Nuclear fuel material in accordance with claim 2, characterized in that the spinel is MgAl₂O₄.

4. Nuclear fuel material in accordance with any of claims 1 to 3, characterized in that the dispersed particles of fuel are particles of UO₂ or of a mixed oxide containing UO₂.

5. Nuclear fuel material in accordance with any of claims 1 to 3, characterized in that the particles dispersed in the matrix have a diameter of 70 µm to 230 µm.

6. Nuclear fuel material in accordance with claim 4, characterized in that the particles dispersed in the matrix have a diameter of 70 µm to 230 µm.

7. Nuclear fuel material in accordance with either of claims 5 or 6, characterized in that the particles dispersed in the matrix have a diameter of 90 µm to 120 µm.

8. Nuclear fuel material in accordance with claim 4, characterized in that UO₂ represents 20 to 40 % by volume of the nuclear fuel material.

9. Method of manufacture of a nuclear fuel material in accordance with any one of claims 1 to 8, characterized in that it comprises the following stages :
a) mixing the particles of a precursor of a nuclear fuel having diameters lying within the limits of a given particle size range, with a powder of a material intended to form a ceramic matrix, inert under irradiation.
b) compressing the mixture into shape, and
c) sintering the compressed mixture in a reducing atmosphere comprising H₂O and under conditions such that the crystal lattice volume of the precursor of the nuclear fuel is reduced during heat treatment.

10. Method of manufacture of a nuclear fuel material in accordance with claim 9, characterized in that the reducing atmosphere comprises H₂ and H₂O.

11. Method of manufacture of a nuclear fuel material in accordance with claim 9, characterized in that the reducing atmosphere is a mixture of argon, H₂ and H₂O.

12. Method of manufacture of a nuclear fuel material in accordance with claim 10 or 11, characterized in that the partial pressure ratio pH₂/pH₂O is 40 to 60.

13. Method of manufacture of a nuclear fuel material in accordance with claim 9, characterized in that the diameter of the particles of the fuel precursor is between 100 and 300 µm.

14. Method of manufacture of a nuclear fuel material in accordance with claim 9, characterized in that the diameter of the particles of the fuel precursor is between 120 and 160 µm.

15. Method of manufacture of a nuclear fuel material in accordance with claim 9, characterized in that the precursor is U₃O₈ or a UO₂-U₃O₈ mixture.

16. Method of manufacture of a nuclear fuel material in accordance with claim 9, characterized in that compressing into form is conducted in two stages, the first compression stage being conducted at a pressure of 30 to 50 MPa, the second compression stage being conducted at a pressure of 300 to 350 MPa.

17. Method of manufacture of a nuclear fuel material in accordance with any of claims 9 to 16, characterized in that sintering is carried out at a temperature of 1640 to 1700°C.

18. Method of manufacture of a nuclear fuel material in accordance with claim 9, characterized in that the precursor particles are obtained by setting in operation the following stages :
1) pressing the precursor powder to obtain raw pressings
2) crushing the raw pressings to obtain granules,
3) screening the granules,
4) spheroidising the screened granules into precursor particles, and
5) eliminating by screening those precursor particles whose diameter does not lie within the given particle size limits.

19. Method in accordance with claim 18, characterized in that the precursor powder being U₃O₈, the latter is obtained by calcination of UO₂ in air at a temperature of 450°C to 500°C.
